(19) **Europäisches Patentamt**

**European Patent Office**

**Office européen des brevets**

(11) **EP 1 251 652 A2**

(12) **EUROPEAN PATENT APPLICATION**

(43) Date of publication:
23.10.2002 Bulletin 2002/43

(51) Int Cl.⁷: **H04J 14/02**, G02B 6/34

(21) Application number: 02251157.0

(22) Date of filing: 20.02.2002

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 20.02.2001 JP 2001043795
24.07.2001 JP 2001223226

(71) Applicant: **THE FURUKAWA ELECTRIC CO., LTD.
Tokyo 100-8322 (JP)**

(72) Inventors:
• **Nara, Kazutaka, The Furukawa Electric Co., Ltd.
Chiyoda-ku, Tokyo 100-8322 (JP)**
• **Kashihara, Kazuhisa,
Furukawa Electric Co., Ltd.
Chiyoda-ku, Tokyo 100-8322 (JP)**

(74) Representative: **Dealtry, Brian et al
Eric Potter Clarkson,
Park View House,
58 The Ropewalk
Nottingham NG1 5DD (GB)**

(54) **Arrayed waveguide grating optical multiplexer/demultiplexer**

(57) An arrayed waveguide grating optical multiplexer/demultiplexer includes an arrayed waveguide connected to at least one first optical waveguide via a first slab waveguide. A plurality of second optical waveguides are connected to the arrayed waveguide via the second slab waveguide. A number ($N_{ch}$) of the plurality of second optical waveguides is determined to substantially satisfy the equation, $\Delta f_{fsr} = \Delta f_{ch} \cdot N_{ch}$. $\Delta f_{fsr}$ is Free Spectral Range of the arrayed waveguide grating optical multiplexer/demultiplexer. $\Delta f_{ch}$ is a frequency interval between frequencies of lights to be input to the arrayed waveguide grating optical multiplexer/demultiplexer for being multiplexed or lights to be output from the arrayed waveguide grating optical multiplexer/demultiplexer after being demultiplexed.

Fig. 1

**Description**

CROSS-REFERENCE TO RELATED APPLICATIONS

The present application claims priority to Japanese Patent Application No. 2001-43795 filed February 20, 2001, and Japanese Patent Application No. 2001-223226 filed July 24, 2001. The contents of these applications are incorporated herein by reference in their entirety.

BACKGROUND OF THE INVENTION

FIELD OF THE INVENTION

The present invention relates to an arrayed waveguide grating optical multiplexer/demultiplexer, a method for manufacturing the arrayed waveguide grating optical multiplexer/demultiplexer, and an optical multiplexer/demultiplexer system utilizing the arrayed waveguide grating optical multiplexer/demultiplexer.

DISCUSSION OF THE BACKGROUND

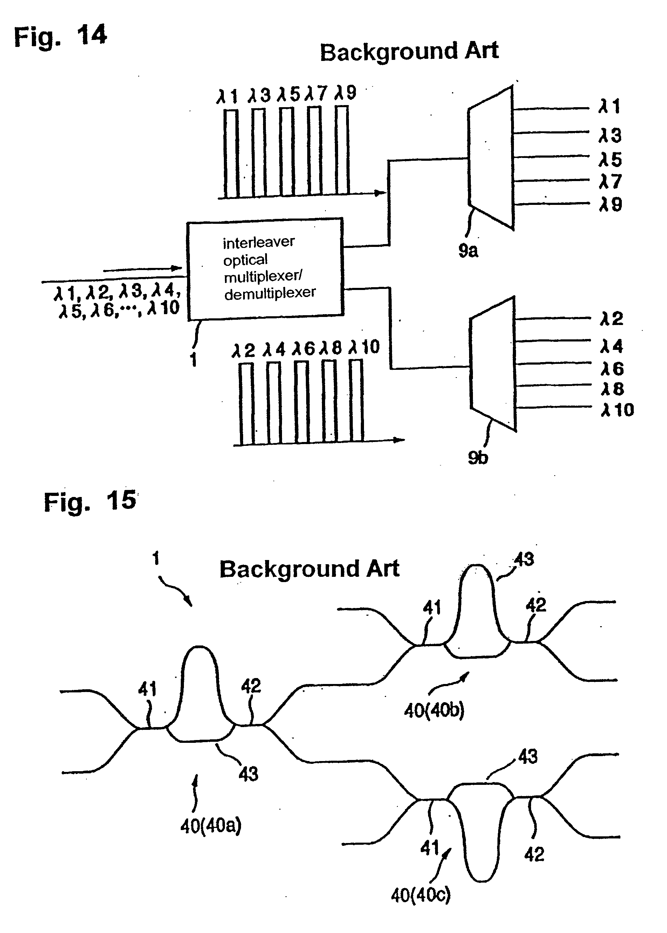

Figure 14 shows an optical multiplexer/demultiplexer system utilizing an interleaver optical wavelength multiplexer/demultiplexer. Referring to Figure 14, output side of the interleaver optical wavelength multiplexer/demultiplexer 1 is connected to two optical multiplexers/demultiplexers (9a and 9b). This optical multiplexer/demultiplexer system is utilized to increase a number of optical wavelength division multiplexing. The interleaver optical wavelength multiplexer/demultiplexer 1 is configured to divide a wavelength division multiplexing light having a plurality of wavelengths with a constant frequency interval into a plurality of wavelength division multiplexing lights each having a plurality of wavelengths. In Figure 14, a wavelength division multiplexing light having a plurality of wavelengths ($\lambda1$, $\lambda2$, $\lambda3$, $\lambda4$, $\lambda5$, $\lambda6$, $\lambda7$, $\lambda8$, $\lambda9$, and $\lambda10$) is divided into a first wavelength division multiplexing light having a plurality of wavelengths ($\lambda1$, $\lambda3$, $\lambda5$, $\lambda7$, and $\lambda9$) and a second wavelength division multiplexing light having a plurality of wavelengths ($\lambda2$, $\lambda4$, $\lambda6$, $\lambda8$, and $\lambda10$).

The optical multiplexers/demultiplexers (9a and 9b) include arrayed waveguide gratings. Each of the optical multiplexers/demultiplexers (9a and 9b) is configured to demultiplexes each of the first and second wavelength division multiplexing lights into lights each having a different single wavelength.

Figure 15 shows an interleaver optical wavelength multiplexer/demultiplexer which includes Mach-Zehnder circuits. Referring to Figure 15, a first Mach-Zehnder circuit (40a) is connected to a second and third Mach-Zehnder circuits (40b and 40c). Each Mach-Zehnder circuits 40 (40a, 40b and 40c) includes a phase shifter 43 provided between direction connecting portions (41 and 42).

SUMMARY OF THE INVENTION

According to one aspect of the present invention, an arrayed waveguide grating optical multiplexer/demultiplexer includes an arrayed waveguide connected to at least one first optical waveguide via a first slab waveguide. A plurality of second optical waveguides are connected to the arrayed waveguide via the second slab waveguide. A number ($N_{ch}$) of the plurality of second optical waveguides is determined to substantially satisfy the equation, $\Delta f_{fsr} = \Delta f_{ch} \cdot N_{ch}$, wherein $\Delta f_{fsr}$ is Free Spectral Range of the arrayed waveguide grating optical multiplexer/demultiplexer and $\Delta f_{ch}$ is a frequency interval between frequencies of lights to be input to the arrayed waveguide grating optical multiplexer/demultiplexer for being multiplexed or lights to be output from the arrayed waveguide grating optical multiplexer/demultiplexer after being demultiplexed.

According to another aspect of the present invention, an arrayed waveguide grating optical multiplexer/demultiplexer includes an arrayed waveguide connected to at least one first optical waveguide via a first slab waveguide. A plurality of second optical waveguides are connected to the arrayed waveguide via the second slab waveguide. A number ($N_{ch}$) of the plurality of second optical waveguides is determined, based on a frequency interval ($\Delta f_{ch}$) between frequencies of lights to be input to the arrayed waveguide grating optical multiplexer/demultiplexer for being multiplexed or lights to be output from the arrayed waveguide grating optical multiplexer/demultiplexer after being demultiplexed, such that the arrayed waveguide grating optical multiplexer/demultiplexer functions as an interleaver optical wavelength multiplexer/demultiplexer.

According to yet another aspect of the present invention, a method for manufacturing an arrayed waveguide grating optical multiplexer/demultiplexer includes providing at least one first optical waveguide, providing a first slab waveguide, and providing an arrayed waveguide connected to the at least one first optical waveguide via the first slab waveguide. A second slab waveguide is provided. A plurality of second optical waveguides are connected to the arrayed waveguide via the second slab waveguide. A number ($N_{ch}$) of the plurality of second optical waveguides is determined to substantially satisfy the following equation:

$$\Delta f_{fsr} = \Delta f_{ch} \cdot N_{ch}$$

where

$\Delta f_{fsr}$: Free Spectral Range of the arrayed waveguide grating optical multiplexer/demultiplexer
$\Delta f_{ch}$: a frequency interval between frequencies of lights to be input to the arrayed waveguide grating optical multiplexer/demultiplexer for being multiplexed or lights to be output from the arrayed waveguide grating optical multiplexer/demultiplexer after being demultiplexed.

According to yet another aspect of the present invention, a method for manufacturing an arrayed waveguide grating optical multiplexer/demultiplexer includes providing at least one first optical waveguide, providing a first slab waveguide, and providing an arrayed waveguide connected to the at least one first optical waveguide via the first slab waveguide. A second slab waveguide is provided. A plurality of second optical waveguides are connected to the arrayed waveguide via the second slab waveguide. A number ($N_{ch}$) of the plurality of second optical waveguides is determined, based on a frequency interval ($\Delta f_{ch}$) between frequencies of lights to be input to the arrayed waveguide grating optical multiplexer/demultiplexer for being multiplexed or lights to be output from the arrayed waveguide grating optical multiplexer/demultiplexer after being demultiplexed, such that the arrayed waveguide grating optical multiplexer/demultiplexer functions as an interleaver optical wavelength multiplexer/demultiplexer.

According to yet further aspect of the present invention, an optical multiplexer/demultiplexer system includes an arrayed waveguide grating optical multiplexer/demultiplexer and at least two optical multiplexer/demultiplexer units. An arrayed waveguide grating optical multiplexer/demultiplexer includes an arrayed waveguide connected to at least one first optical waveguide via a first slab waveguide. A plurality of second optical waveguides are connected to the arrayed waveguide via the second slab waveguide. A number ($N_{ch}$) of the plurality of second optical waveguides is determined to substantially satisfy the equation, $\Delta f_{fsr} = \Delta f_{ch} \cdot N_{ch}$, wherein $\Delta f_{fsr}$ is Free Spectral Range of the arrayed waveguide grating optical multiplexer/demultiplexer and $\Delta f_{ch}$ is a frequency interval between frequencies of lights to be input to the arrayed waveguide grating optical multiplexer/demultiplexer for being multiplexed or lights to be output from the arrayed waveguide grating optical multiplexer/demultiplexer after being demultiplexed. Each of the at least two optical multiplexer/demultiplexer units is connected to each of the plurality of second optical waveguides.

BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Figure 1 is a schematic diagram illustrating an optical wavelength multiplexer/demultiplexer according to an embodiment of the present invention;
Figure 2 is a result of simulated calculation of the arrayed waveguide grating shown in Figure 1;
Figure 3 is a graph showing exemplary transmission characteristics of the optical wavelength multiplexer/demultiplexer of the embodiment shown in Figure 1;
Figures 4(a)-4(c) are diagrams showing an exemplary process for manufacturing the optical wavelength multiplexer/demultiplexer of the above embodiment according to the present invention;
Figure 5 is a schematic diagram showing an optical wavelength multiplexer/demultiplexer system of the second embodiment according to the present invention;
Figure 6 is an enlarged view of Section A in Figure 5;
Figure 7 is a graph showing exemplary transmission characteristics of the optical wavelength multiplexer/demultiplexer of the second embodiment;
Figure 8 is a schematic diagram showing an optical wavelength multiplexer/demultiplexer system of the third embodiment according to the present invention;
Figure 9 is a graph showing exemplary transmission characteristics of the optical wavelength multiplexer/demultiplexer of the third embodiment;
Figure 10 is a schematic diagram showing an optical wavelength multiplexer/demultiplexer system of the fourth embodiment according to the present invention;
Figure 11 is an enlarged view of Section A in Figure 10;

Figure 12 is a graph showing exemplary transmission characteristics of the optical wavelength multiplexer/demultiplexer of the third embodiment;

Figure 13 is diagrams showing connecting ends of the optical inputs and output waveguides of various embodiments;

Figure 14 is a schematic diagram showing an exemplary optical multiplexer/demultiplexer system of a background art;

Figure 15 is a schematic diagram showing an exemplary optical multiplexer/demultiplexer system of a background art;

Figure 16 is a schematic diagram showing an optical wavelength multiplexer/demultiplexer system of another embodiment according to the present invention;

Figure 17 is a schematic diagram illustrating a portion of an optical wavelength multiplexer/demultiplexer according to an embodiment of the present invention; and

Figure 18 is a schematic diagram showing an optical wavelength multiplexer/demultiplexer system of another embodiment according to the present invention.

DESCRIPTION OF THE EMBODIMENTS

The embodiments will now be described with reference to the accompanying drawings, wherein like reference numerals designate corresponding or identical elements throughout the various drawings.

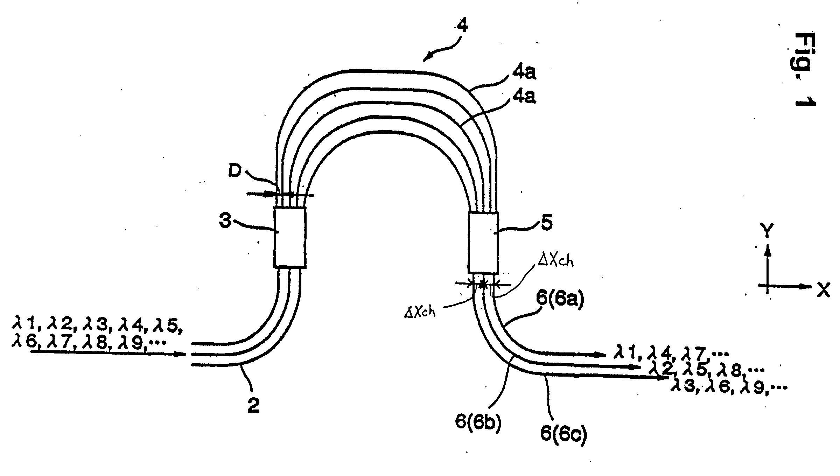

Figure 1 is a schematic diagram illustrating an optical wavelength multiplexer/demultiplexer according to an embodiment of the present invention. Referring to Figure 1, the optical wavelength multiplexer/demultiplexer has one or more optical input waveguides (at least one first optical waveguide) 2 provided side by side, a first slab waveguide 3 connected to the outgoing side of the optical input waveguides 2, an arrayed waveguide 4 comprised of a plurality of channel waveguides (4a) which are connected to the outgoing side of the first slab waveguide 3 and are provided side by side in different lengths, respectively, and this length of adjacent channel waveguides (4a) are different from each other by a predetermined length difference ($\Delta$L), a second slab waveguide 5 connected to the outgoing side of the arrayed waveguide 4, and a plurality of optical output waveguides (second optical waveguides) 6 provided side by side and connected to the outgoing side of the second slab waveguide 5.

In Figure 1, the optical wavelength multiplexer/demultiplexer has three optical input waveguides 2, five channel waveguides (4a) and three optical output waveguides 6. However, the numbers of the optical output waveguides 6, optical input waveguides 2 and channel waveguides (4a) are to be determined appropriately. The number of the optical input waveguides 2 is at least one.

First, the following Equation (1) expresses the relationship between the center frequency (f) of a light transmitted by an arrayed waveguide grating and the position (x) of the light output from the second slab waveguide in the X-direction (see Figure 1).

$$df/dx = (n_s \cdot D \cdot c)/(L_f \cdot m \cdot \lambda^2) = \{(n_s \cdot D)/(L_f \cdot \Delta L)\} \cdot (1/n_g) \cdot f \qquad (1)$$

The center frequency (f) is a frequency when a diffraction angle is equal to 0 with respect to a designed diffraction order (m).

The X-direction is a direction substantially perpendicular to a light propagation direction in the second slab waveguide 5 (see Fig. 1). In Equation (1), ($n_s$) is an effective refractive index of the first and second slab waveguides, (D) is a pitch of the channel waveguides forming the arrayed waveguide, (c) is the speed of light, ($L_f$) is a focal length of the first and second slab waveguides, (m) is a diffraction order, ($\lambda$) is a center wavelength of the arrayed waveguide, and ($n_g$) is a group refractive index of the arrayed waveguide.

According to Equation (1), the frequency of light output from the second slab waveguide 5 differs depending on the position of the connecting end of an optical output waveguide, and the optical frequency output from that position is shifted by (df) when the position of the optical output waveguide is shifted by (dx).

Thus, if a pitch between the connecting ends of the optical output waveguides 6 is ($\Delta x_{ch}$), a frequency interval ($\Delta f_{ch'}$) between frequencies of the lights output from all of the neighboring optical output waveguides is expressed in Equation (2) as follow.

$$\Delta f_{ch'} = \{(n_s \cdot D)/(L_f \cdot \Delta L)\} \cdot (1/n_g) \cdot f \cdot \Delta x_{ch} \qquad (2)$$

Then, if a frequency interval ($\Delta f_{ch}$) between frequencies of lights which have been multiplexed to be input from the optical input waveguide is equal to ($\Delta f_{ch'}$), lights having the frequency interval ($\Delta f_{ch}$) can be output from the respective optical output waveguides arranged to have the pitch ($\Delta x_{ch}$) of the connection end, with a low crosstalk.

Furthermore, the Free Spectral Range ($\Delta f_{fsr}$) of the arrayed waveguide grating is expressed by Equation (3) as follow.

$$\Delta f_{fsr} = c/(n_g \cdot \Delta L + d\theta) \qquad (3)$$

The Free Spectral Range ($\Delta f_{fsr}$) is a difference between optical frequency of a diffraction order (m) and that of a diffraction order (m±1).

In Equation (3), ($\Delta L$) is a difference in the lengths of the adjacent channel waveguides in the arrayed waveguide, and ($\theta$) is a diffraction angle of a luminous flux output from the arrayed waveguide. Since the diffraction angle ($\theta$) is almost 0 near the center wavelength of the optical wavelength multiplexer/demultiplexer, the Free Spectral Range ($\Delta f_{fsr}$) becomes almost equal to $c/(n_g \cdot \Delta L)$.

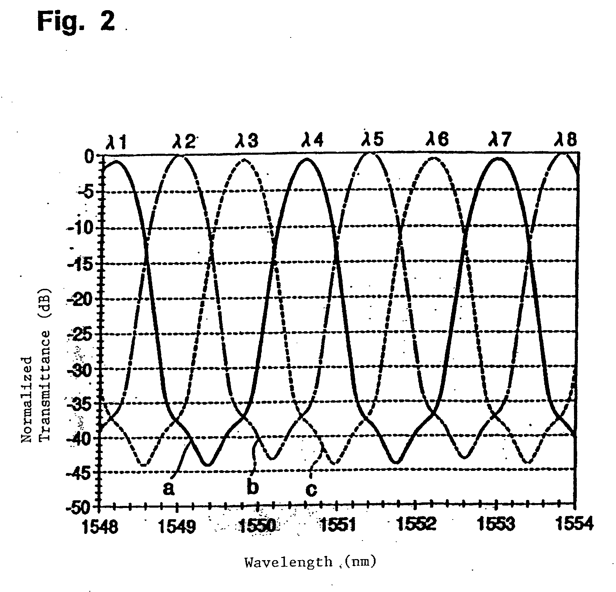

Figure 2 is a result of simulated calculation of the arrayed waveguide grating shown in Figure 1. The arrayed waveguide grating has periodic characteristics in the Free Spectral Range. Since the equation, $\Delta f_{fsr} = \Delta f_{ch} \cdot N_{ch}$, as described above, is established, wavelengths output from the optical output waveguides, respectively, can have periodic characteristics as shown in Figure 2. The parameters used in this calculation is shown in Table 1 below.

Table 1

| PARAMETERS | VALUES |
| --- | --- |
| frequency interval of lights which have been multiplexed to be input from the optical input waveguide ($\Delta f_{ch}$) | 100 GHz |
| Free Spectral Range ($\Delta f_{fsr}$) | 300 GHz |
| number of the optical output waveguides ($N_{ch}$) | 3 |
| pitch of the connecting ends of the optical output waveguides ($\Delta x_{ch}$) | 20 μm |
| pitch of the channel waveguides (D) | 15 μm |
| focal length of the first and second slab waveguides ($L_f$) | 859 μm |
| diffraction order (m) | 635 |
| effective refractive index of the first and second slab waveguides ($n_s$) | 1.4529 |
| group refractive index of the arrayed waveguide ($n_g$) | 1.4751 |

In the interleaver optical wavelength multiplexer/demultiplexer shown in Figure 15, in order to improve crosstalk, the characteristics of the Mach-Zehnder circuits (40a, 40b and 40c) should be made to be identical by, for example, a phase trimming using a large laser device. The arrayed waveguide grating according to the aforementioned embodiment of the present invention can be manufactured easily and precisely at a lower cost, and realize a low crosstalk, for example, less than -25 dB, high wavelength accuracy and a broad 1 dB band range, for example, more than 0.2 nm.

In the interleaver optical wavelength multiplexer/demultiplexer shown in Figure 15, the number of output when it is used as a demultiplexer is only a even number. The arrayed waveguide according to the aforementioned embodiment of the present invention makes it possible to divide a light having multiplexed wavelengths into more than two, for example, three, light signals having multiplexed wavelengths, respectively.

In the optical wavelength multiplexer/demultiplexer of the embodiment according to the present invention, a waveguide pattern having the above-mentioned structure shown in Figure 1 is formed on a substrate, and the parameters are set as in Table 1 so as to substantially satisfy the equation, $\Delta f_{fsr} = \Delta f_{ch} \cdot N_{ch}$.

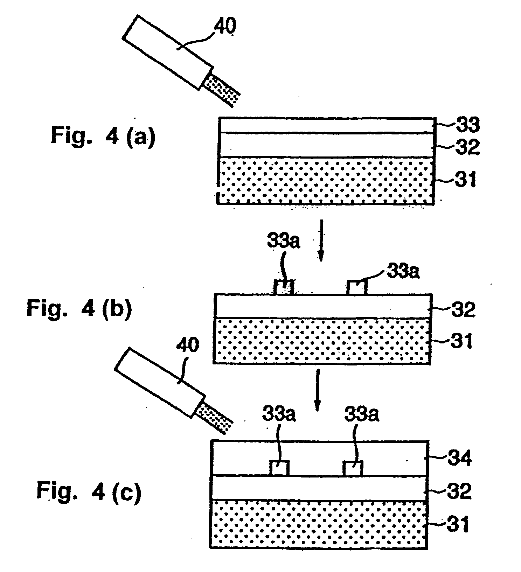

Figure 4 is a diagram showing an exemplary process for manufacturing the optical wavelength multiplexer/demultiplexer of the above embodiment according to the present invention. In Figure 4(a), an under-cladding film 32 and a core film 33 are formed on a silicon substrate 31 by the flame hydrolysis deposition method. Then, as shown in Figure 4(b), using a photo-mask having the waveguide pattern shown in Figure 1, a core (33a) having the waveguide pattern is formed by photolithography and dry etching.

Subsequently, in Figure 4(c), an over-cladding film 34 is formed over the core 33a by using the flame hydrolysis deposition method.

According to the optical wavelength multiplexer/demultiplexer of the embodiment shown in Figure 1, when a light having multiplexed wavelengths, for example, wavelengths λ1, λ2, λ3, λ4, λ5, λ6, λ7, λ8, λ9 .... is input, the optical output waveguide (6a) of the first port outputs a light having multiplexed wavelengths $\lambda 1$, $\lambda 4$, $\lambda 7$ ..., the optical output waveguide (6b) of the second port outputs a light having multiplexed wavelengths $\lambda 2$, $\lambda 5$, $\lambda 8$ ..., and the optical output waveguide (6c) of the third port outputs a light having multiplexed wavelengths $\lambda 3$, $\lambda 6$, $\lambda 9$ ....

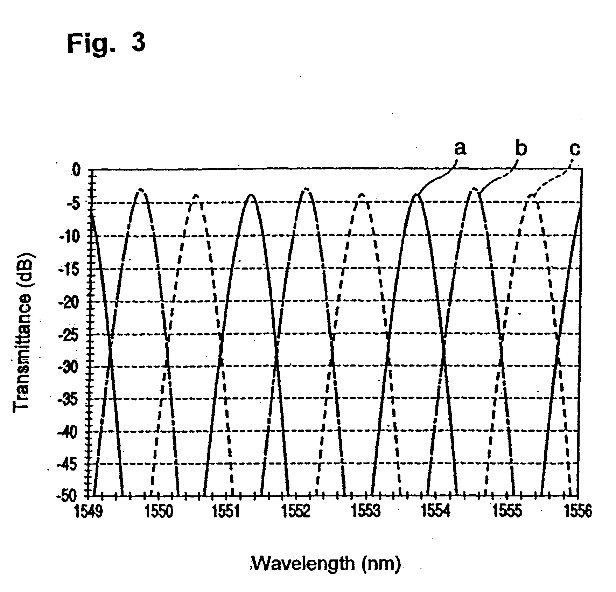

Figure 3 is a graph showing exemplary transmission characteristics of the optical wavelength multiplexer/ demultiplexer of the embodiment shown in Figure 1. Line (a) shows a transmittance of the light output from the optical output waveguide (6a) of the first port, Line (b) shows a transmittance of the light output from the optical output waveguide (6b) of the second port, and Line (c) shows a transmittance of the light output from the optical output waveguide (6c) of the third port. In this embodiment, a crosstalk value is lower than -30 dB.

The optical wavelength multiplexer/demultiplexer of the embodiment divides a light having multiplexed wavelengths into, for example, three lights having different multiplexed wavelengths. Also, the optical wavelength multiplexer/demultiplexer of the embodiment can be manufactured easily and precisely at a lower cost.

Further, the optical wavelength multiplexer/demultiplexer of the embodiment has a low crosstalk and high wavelength accuracy, thereby allowing to divide a light into an appropriate number of lights having different multiplexed wavelengths at a low crosstalk and high wavelength accuracy.

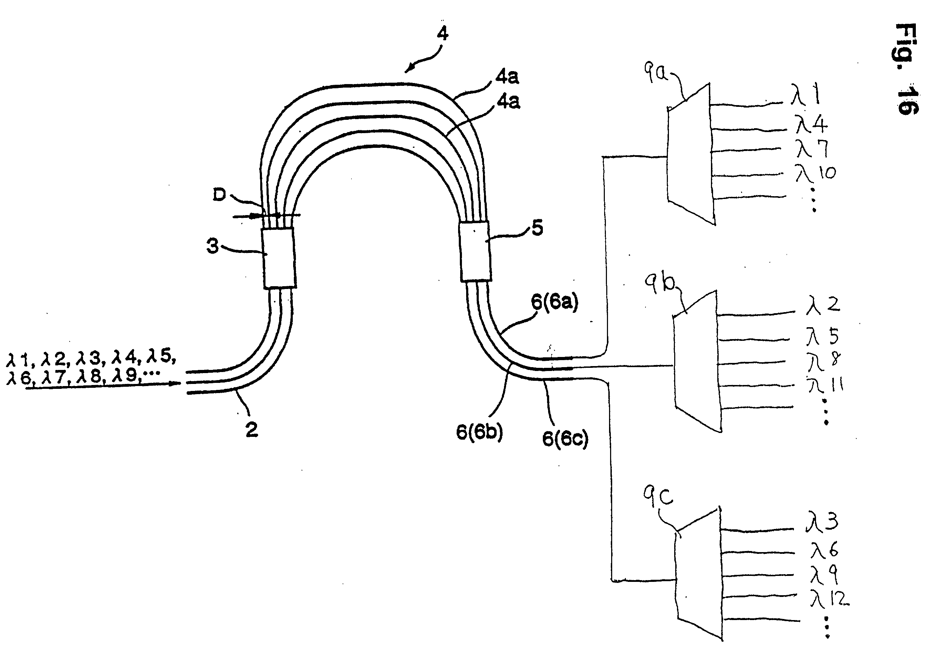

Figure 16 is a schematic diagram showing an exemplary optical multiplexer/demultiplexer system. The optical wavelength multiplexer/demultiplexer of the above embodiment may be incorporated into such an optical multiplexer/ demultiplexer system. In Figure 14, the interleaver optical multiplexer/demultiplexer system has only two output elements. However, by utilizing the optical wavelength multiplexer/demultiplexer of the above embodiment, an optical multiplexer/demultiplexer system has three outputs. The optical output waveguides (6a, 6b, 6c) of the optical wavelength multiplexer/demultiplexer are connected to arrayed waveguide gratings (9a, 9b and 9c), respectively, as their respective optical multiplexer/demultiplexer.

In the optical multiplexer/demultiplexer system utilizing the optical wavelength multiplexer/demultiplexer of the embodiment, the interleaver optical wavelength multiplexer/demultiplexer outputs lights each having a different set of wavelengths, and the arrayed waveguide gratings, i.e., the optical multiplexer/demultiplexer, further divide those lights into light signals each having a different wavelength and outputs them from the optical output waveguides, respectively, at a low crosstalk and high wavelength accuracy.

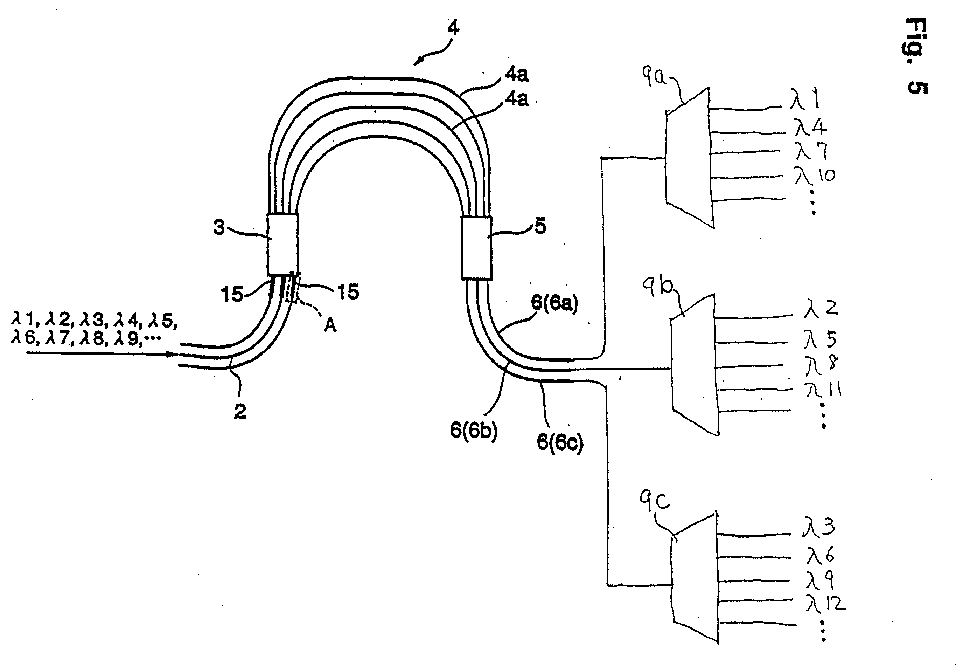

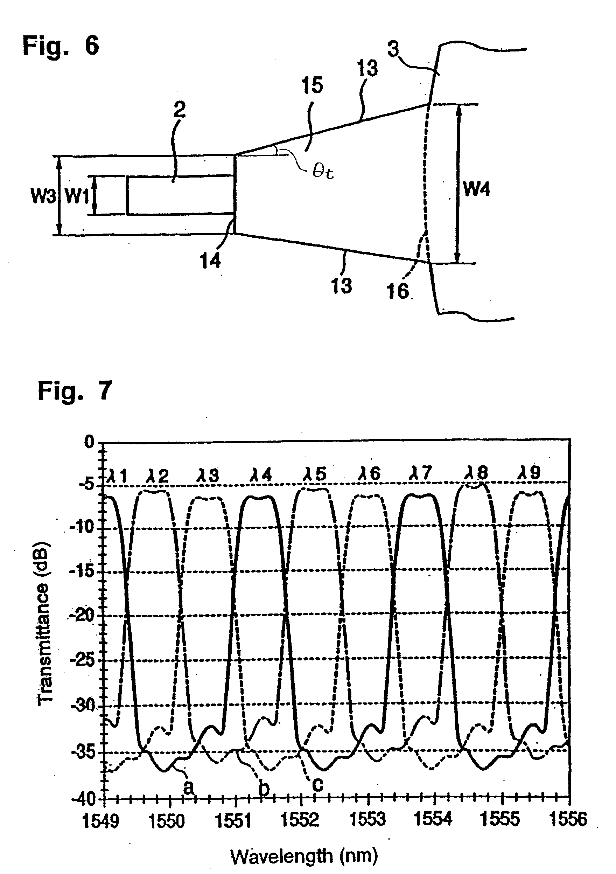

Figure 5 is a schematic diagram showing an optical wavelength multiplexer/demultiplexer of the second embodiment according to the present invention, and Figure 6 is an enlarged view of Section A in Figure 5.

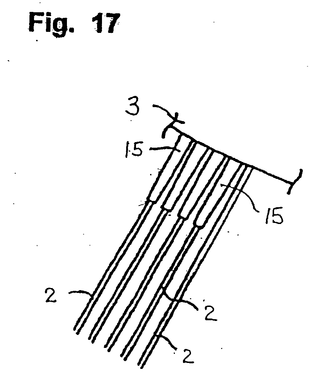

In the optical wavelength multiplexer/demultiplexer of the second embodiment, a trapezoidal waveguide 15 is connected to the outputting side of each optical input waveguide 2, has a width which is wider than the width of each optical input waveguide 2, and is widening toward the first slab waveguide 3 as shown in Figures 5 and 6. The trapezoidal waveguide 15 has an upper end 14 (first end portion) serving as an entrance and having a width sufficient for a multi-mode, and sides 13 which are substantially straight. In Figure 6, each of all optical input waveguides 2 is connected to the first slab waveguide 3 via each trapezoidal waveguide 15. However, as shown in Figure 17, some of all optical input waveguides 2 may be connected to the first slab waveguide 3 via each trapezoidal waveguide 15, and other optical input waveguides 2 may be directly connected to the first slab waveguide 3 without interposing the trapezoidal waveguide 15.

The width that satisfies the above multi-mode condition is obtained as follows. The normalized frequency $\nu$ of light that is propagated in an optical fiber is generally represented by the following expression 4.

$$\nu = k_0 \alpha \sqrt{n_1^2 - n_0^2} \tag{4}$$

where (a) is the core radius of the optical fiber, ($n_1$) is refractive index of core, ($n_0$) is refractive index of cladding, ($k_0$) is a normalized wave number which is given $k_0 = 2\pi / \lambda$. Note that, ($\lambda$) is the wavelength of light.

Also, when the above expression 4 is made to correspond to the rectangular waveguide, assuming that the width of the rectangular waveguide (or the height) is (W), it is proved that approximation can be relatively excellently made with a = w/2.5. Therefore, the expression 4 can be approximated by the following expression 5.

$$\nu = \frac{2\pi}{\lambda} \cdot \frac{w}{2.5} \sqrt{n_1^2 - n_0^2} = \frac{4\pi w}{5\lambda} \sqrt{n_1^2 - n_0^2} \tag{5}$$

In order to satisfy the multi-mode condition, it is necessary to satisfy the following expression 6.

$$\nu \geq 2.4 \tag{6}$$

In order to satisfy the single mode condition, it is necessary to satisfy the following expression 7.

$$\nu < 2.4 \qquad\qquad (7)$$

The trapezoidal waveguide 15 functions as a multi-mode waveguide as well as a waveguide widening in the moving direction of a light.

The trapezoidal waveguide 15 shown in Figure 6 has the upper end 14 whose width (first width, W3) is wider than the width (W1) of each optical input waveguide 2, and is widening at a tapering angle ($\theta t$). Thus, the widths of the trapezoidal waveguide 15 are wider than that of each optical input waveguide 2 in its entirety. Also, the trapezoidal waveguide 15 has a lower end 16 (second end portion) which is slightly rounded and has. a width (second width, W4).

In the second embodiment, the parameters discussed above are set as follows: the width (W1) of the optical input waveguide is 6.5 $\mu$m, the width (W3) of the upper end 14 of the trapezoidal waveguide 15 is 20.0 $\mu$m, the taper angle ($\theta t$) is 0.4°, and the width (W4) of the lower end 16 of the trapezoidal waveguide 15 is 35.0 $\mu$m.

Also, the optical wavelength multiplexer/demultiplexer of the second embodiment has the parameters shown in Table 2 so as to substantially satisfy the equation, $\Delta f_{fsr} = \Delta f_{ch} \cdot N_{ch}$. The optical wavelength multiplexer/demultiplexer of the second embodiment is manufactured in a similar manner as the optical wavelength multiplexer/demultiplexer of the first embodiment.

Table 2

| PARAMETERS | VALUES |
|---|---|
| frequency interval of lights which have been multiplexed to be input from the optical input waveguide ($\Delta f_{ch}$) | 100 GHz |
| Free Spectral Range ($\Delta f_{fsr}$) | 300 GHz |
| number of the optical output waveguides ($N_{ch}$) | 3 |
| pitch of the connecting ends of the optical output waveguides ($\Delta x_{ch}$) | 30 $\mu$m |
| pitch of the channel waveguides (D) | 15 $\mu$m |
| focal length of the first and second slab waveguides ($L_f$) | 1261.8 $\mu$m |
| diffraction order (m) | 635 |
| effective refractive index of the first and second slab waveguides ($n_s$) | 1.4529 |
| group refractive index of the arrayed waveguide ($n_g$) | 1.4751 |

By constructing the optical wavelength multiplexer/demultiplexer of the second embodiment as such, the same operations and advantages attributable to the first embodiment are observed. For that, as shown in Fig. 5, by incorporating the optical wavelength multiplexer/demultiplexer of the second embodiment into an optical multiplexer/demultiplexer system, the similar operations and advantages attributable to the optical multiplexer/demultiplexer system incorporating the optical wavelength multiplexer/demultiplexer of the first embodiment can be expected.

Furthermore, by providing the trapezoidal waveguide 15 on the output side of the optical input waveguide 2 as shown in Figure 6, the optical wavelength multiplexer/demultiplexer of the second embodiment has 1 dB band width which is broader than that of the first embodiment along with a low crosstalk and high wavelength accuracy. Therefore, the optical multiplexer/demultiplexer system incorporating the optical wavelength multiplexer/demultiplexer of the second embodiment can output signal lights each having a different wavelength at a lower crosstalk and higher wavelength accuracy.

Figure 7 is a graph showing exemplary transmission characteristics of the optical wavelength multiplexer/demultiplexer of the second embodiment. Line (a) shows a transmittance of the light output from the optical output waveguide (6a) of the first port, Line (b) shows a transmittance of the light output from the optical output waveguide (6b) of the second port, and Line (c) shows a transmittance of the light output from the optical output waveguide (6c) of the third port.

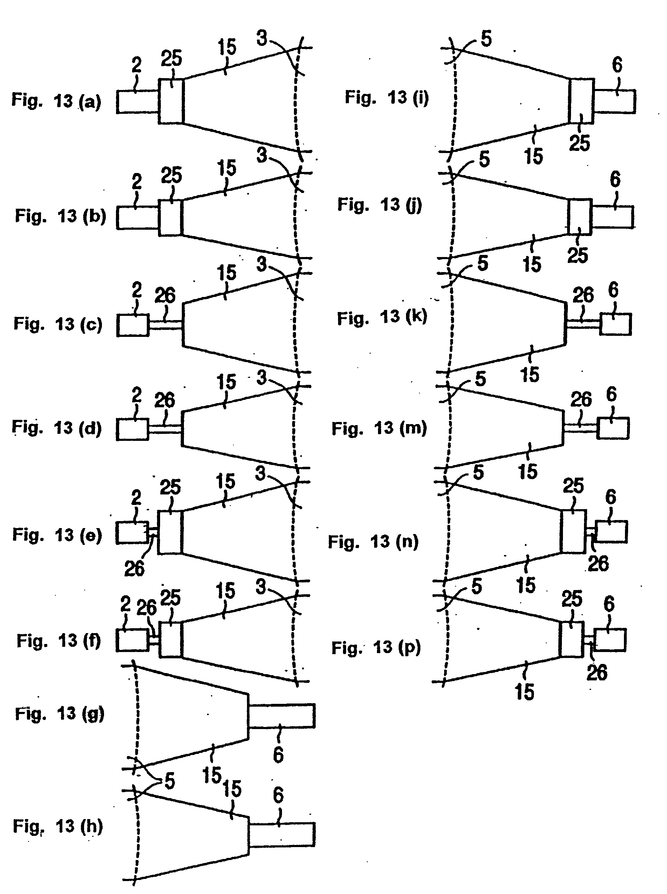

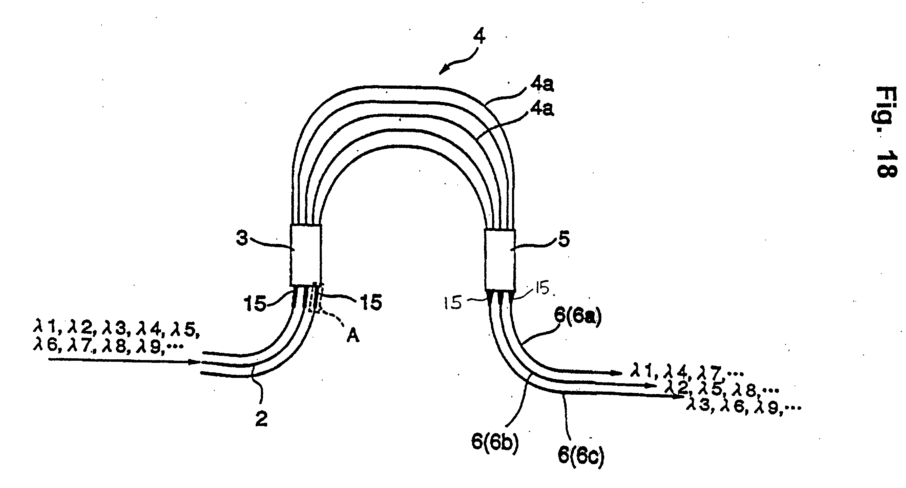

Figure 13(g) is a diagram showing a connecting end of the optical output waveguide of another embodiment. In contrast to the second embodiment, a trapezoidal waveguide 15 shown in Figure 13(g) has a width which is wider than that of each optical output waveguide 6 on the input side of the optical output waveguide 6. This width is set sufficient for a multi-mode. The trapezoidal waveguide 15 in Figure 13(g) is widening toward the second slab waveguide 5. As shown in Figure 18, each of all of the optical output waveguides 6 is connected to the second slab waveguide 5 via each trapezoidal waveguide 15.

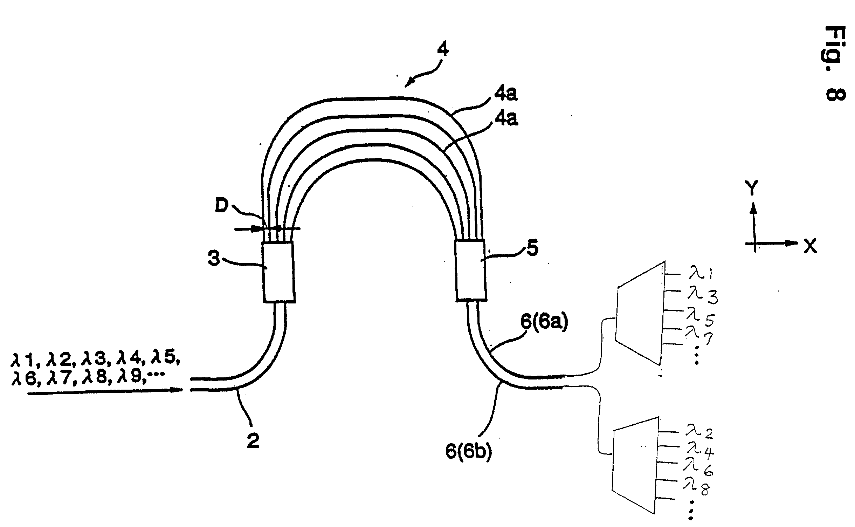

Figure 8 is a schematic diagram showing an optical wavelength multiplexer/demultiplexer of the third embodiment according to the present invention. The optical wavelength multiplexer/demultiplexer of the third embodiment has two optical output waveguides 6, and the parameters shown in Table 3 below.

Table 3

| PARAMETERS | VALUES |
|---|---|
| frequency interval of lights which have been multiplexed to be input from the optical input waveguide ($\Delta f_{ch}$) | 50 GHz |
| Free Spectral Range ($\Delta f_{fsr}$) | 100 GHz |
| number of the optical output waveguides ($N_{ch}$) | 2 |
| pitch of the connecting ends of the optical output waveguides ($\Delta x_{ch}$) | 20 µm |
| pitch of the channel waveguides (D) | 15 µm |
| focal length of the first and second slab waveguides ($L_f$) | 574.18 µm |
| diffraction order (m) | 1900 |
| effective refractive index of the first and second slab waveguides ($n_s$) | 1.4529 |
| group refractive index of the arrayed waveguide ($n_g$) | 1.4751 |

By constructing the optical wavelength multiplexer/demultiplexer of the third embodiment as such, similar operations and advantages attributable to the first embodiment are observed. For that, by incorporating the optical wavelength multiplexer/demultiplexer of the second embodiment into an optical multiplexer/demultiplexer system as shown in Figure 8, the same operations and advantages attributable to the optical multiplexer/demultiplexer system incorporating the optical wavelength multiplexer/demultiplexer of the first embodiment can be expected.

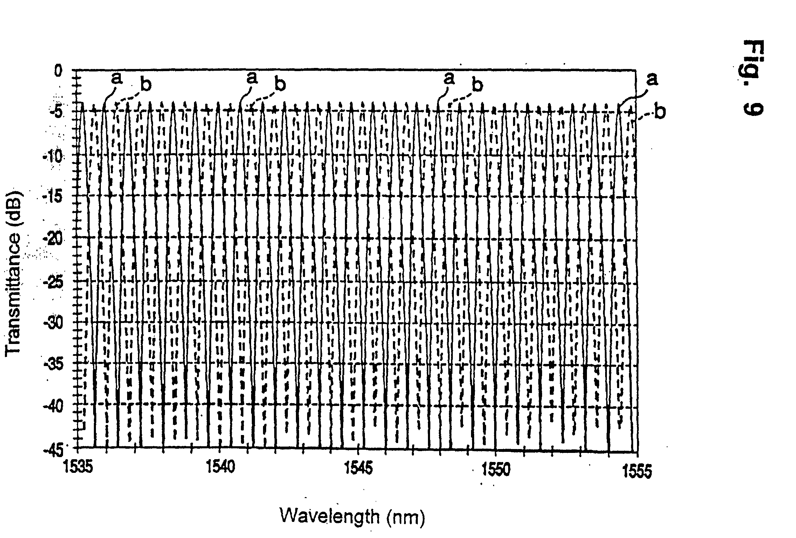

Figure 9 is a graph showing exemplary transmission characteristics of the optical wavelength multiplexer/demultiplexer of the third embodiment. Line (a) shows a transmittance of the light output from the optical output waveguide (6a) of the first port, and Line (b) shows a transmittance of the light output from the optical output waveguide (6b) of the second port. In this embodiment, a cross talk value is lower than -27 dB.

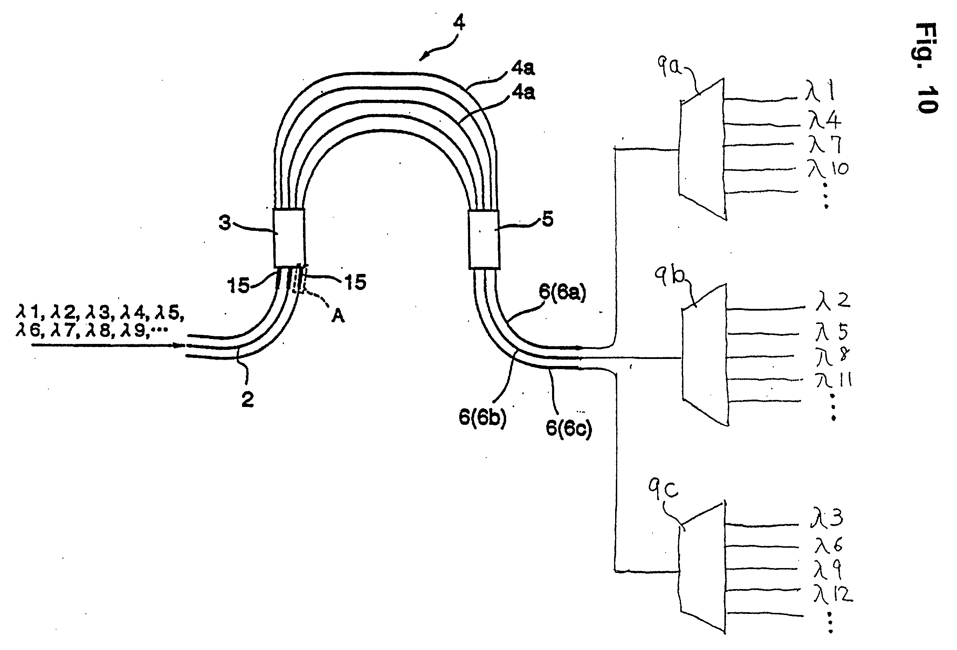

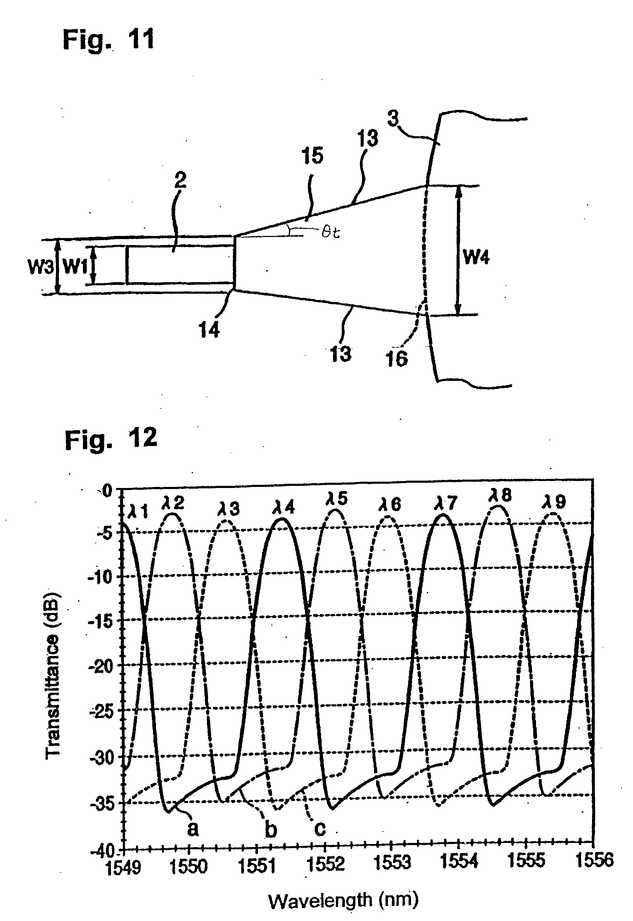

Figure 10 is a schematic diagram showing an optical wavelength multiplexer/demultiplexer of the fourth embodiment according to the present invention, and Figure 11 is an enlarged view of Section A in Figure 10.

In the optical wavelength multiplexer/demultiplexer of the fourth embodiment, a trapezoidal waveguide 15 is connected to the outputting side of each optical input waveguide 2, has a width which is wider than the width of each optical input waveguide 2, is widening toward the first slab waveguide 3 as shown in Figures 10 and 11. The trapezoidal waveguide 15 has an upper end 14 serving as an entrance and having a width sufficient for a single-mode. The trapezoidal waveguide 15 functions as a single-mode waveguide as well as a waveguide widening in the propagating direction of a light.

In Figure 10, each of all optical input waveguides 2 is connected to the first slab waveguide 3 via each trapezoidal waveguide 15. However, as shown in Figure 17, some of all optical input waveguides 2 may be connected to the first slab waveguide 3 via each trapezoidal waveguide 15, and other optical input waveguides 2 may be directly connected to the first slab waveguide 3 without interposing the trapezoidal waveguide 15.

The trapezoidal waveguide 15 shown in Figure 11 has the upper end 14 whose width (W3) is wider than the width (W1) of each optical input waveguide 2, and is widening at a tapering angle (θt). The trapezoidal waveguide 15 has sides 13 which are substantially straight. Thus, the widths of the trapezoidal waveguide 15 are wider than that of each optical input waveguide 2 in its entirety. Also, the trapezoidal waveguide 15 has a lower end 16 which is slightly rounded and has a width (W4).

In the fourth embodiment, the parameters discussed above are set as follows: the width (W1) of the optical input waveguide is 6.5 µm, the width (W3) of the upper end 14 of the trapezoidal waveguide 15 is 7.5 µm, the taper angle (θt) is 0.2°, and the width (W4) of the lower end 16 of the trapezoidal waveguide 15 is 19.0 µm.

Also, the optical wavelength multiplexer/demultiplexer of the fourth embodiment has the parameters shown in Table 4 so as to substantially satisfy the equation, $\Delta f_{fsr} = \Delta f_{ch} \cdot N_{ch}$.

Table 4

| PARAMETERS | VALUES |
|---|---|
| frequency interval of lights which have been multiplexed to be input from the optical input waveguide ($\Delta f_{ch}$) | 100 GHz |
| Free Spectral Range ($\Delta f_{fsr}$) | 300 GHz |
| number of the optical output waveguides ($N_{ch}$) | 3 |
| pitch of the connecting ends of the optical output waveguides ($\Delta x_{ch}$) | 20 µm |
| pitch of the channel waveguides (D) | 15 µm |
| focal length of the first and second slab waveguides ($L_f$) | 859 µm |
| diffraction order (m) | 635 |
| effective refractive index of the first and second slab waveguides ($n_s$) | 1.4529 |
| group refractive index of the arrayed waveguide ($n_g$) | 1.4751 |

By constructing the optical wavelength multiplexer/demultiplexer of the fourth embodiment as such, similar operations and advantages attributable to the second embodiment are also observed. For that, by incorporating the optical wavelength multiplexer/demultiplexer of the fourth embodiment into an optical multiplexer/demultiplexer system as shown in Figure 10, similar operations and advantages attributable to the optical multiplexer/demultiplexer system incorporating the optical wavelength multiplexer/demultiplexer of the second embodiment can be expected.

Figure 12 is a graph showing exemplary transmission characteristics of the optical wavelength multiplexer/demultiplexer of the fourth embodiment. Line (a) shows a transmittance of the light output from the optical output waveguide (6a) of the first port, Line (b) shows a transmittance of the light output from the optical output waveguide (6b) of the second port, and Line (c) shows a transmittance of the light output from the optical output waveguide (6c) of the third port.

Figure 13(h) is a diagram showing a connecting end of the optical output waveguide of another embodiment. In contrast to the fourth embodiment, a trapezoidal waveguide 15 shown in Figure 13(h) has a width which is wider than that of each optical output waveguide 6 on the input side of the optical output waveguide 6. This width is set sufficient for a single-mode. The trapezoidal waveguide 15 in Figure 13(h) is widening toward the second slab waveguide 5. As shown in Figure 18, each of all of the optical output waveguides 6 is connected to the second slab waveguide 5 via each trapezoidal waveguide 15.

Obviously, numerous modifications and variations of the present invention are possible in light of the above teachings. For example, although three optical output waveguides 6 are used in the first, second and fourth embodiments, and two optical output waveguides 6 are used in the third embodiment, there is no specific limitation to the number of the optical output waveguides 6. Thus, an appropriate number of the optical output waveguides 6 are to be selected. In other words, according to the embodiments of the present invention, the Free Spectral Range ($\Delta f_{fsr}$), the frequency interval ($\Delta f_{ch}$) between frequencies of lights which have been multiplexed to be input from the optical input waveguide 2, and the number ($N_{ch}$) of the optical output waveguides 6 are selected appropriately such that the equation, $\Delta f_{fsr} = \Delta f_{ch} \cdot N_{ch}$, is substantially satisfied.

Also, by providing the trapezoidal waveguide 15 between each of the optical input waveguides 2 and the first slab waveguide 3 and/or between each of all optical output waveguides 6 and the second slab waveguide 5 as shown in any of the examples in Figure 13, a broader 1dB band width, a lower crosstalk and higher wavelength accuracy can be obtained as discussed in the second embodiment.

Figures 13(a) and 13(i) are diagrams showing trapezoidal waveguides 15 of additional embodiments. Referring to Figures 13(a) and 13(i), each optical input waveguide 2 is connected to the first slab waveguide 3 via each trapezoidal waveguide 15 and each constant width waveguide 25, and/or each optical output waveguide 6 is connected to the second slab waveguide 5 via each trapezoidal waveguide 15 and each constant width waveguide 25. Each trapezoidal waveguide 15 is widened toward the arrayed waveguide. Each trapezoidal waveguide 15 has a width which is wider than that of the optical input waveguide 2 or optical output waveguide 6. This width is sufficient for a multi-mode. Each constant width waveguide 25 has the substantially same width as that of the narrow end of the trapezoidal waveguide 15 on its narrow end.

Figures 13(b) and 13(j) are diagrams showing trapezoidal waveguides 15 of further additional embodiments. Referring to Figures 13(b) and 13(j), each optical input waveguide 2 is connected to the first slab waveguide 3 via each trapezoidal waveguide 15 and each constant width waveguide 25, and/or each optical output waveguide 6 is connected to the second slab waveguide 5 via each trapezoidal waveguide 15 and each constant width waveguide 25. Each trapezoidal waveguide 15 is widened toward the arrayed waveguide. Each trapezoidal waveguide 15 has a width which is wider than that of the optical input waveguide 2 or optical output waveguide 6. This width is sufficient for a single-mode. Each constant width waveguide 25 has the substantially same width as that of the narrow end of the trapezoidal waveguide 15 on its narrow end.

Figures 13(c), 13(d), 13(k) and 13(m) are diagrams showing trapezoidal waveguides 15 of more additional embodiments. Referring to Figures 13(c), 13(d), 13(k) and 13(m), each optical input waveguide 2 is connected to the first slab waveguide 3 via each trapezoidal waveguide 15 and each narrow straight waveguide 26, and/or each optical output waveguide 6 is connected to the second slab waveguide 5 via each trapezoidal waveguide 15 and each narrow straight waveguide 26. Each trapezoidal waveguide 15 is widened toward the arrayed waveguide. Each trapezoidal waveguide 15 has a width which is wider than that of the optical input waveguide 2 or optical output waveguide 6. Each narrow straight waveguide 26 has a width which is narrower than that of the optical input waveguide 2 or optical output waveguide 6.

Figures 13(e), 13(f), 13(n) and 13(p) are diagrams showing trapezoidal waveguides 15 of still additional embodiments. Referring to Figures 13(e), 13(f), 13(n) and 13(p), each optical input waveguide 2 is connected to the first slab waveguide 3 via each trapezoidal waveguide 15, each constant width waveguide 25 and each narrow straight waveguide 26, and/or each optical output waveguide 6 is connected to the second slab waveguide 5 via each trapezoidal waveguide 15, each constant width waveguide 25 and each narrow straight waveguide 26. Each trapezoidal waveguide 15 is widened toward the arrayed waveguide. Each trapezoidal waveguide 15 has a width which is wider than that of the optical input waveguide 2 or optical output waveguide 6. Each narrow straight waveguide 26 has a width which is narrower than that of the optical input waveguide 2 or optical output waveguide 6. Each constant width waveguide 25 has the substantially same width as that of the narrow end of the trapezoidal waveguide 15 on its narrow end.

By providing such a narrow straight waveguide 26, if the center of the optical intensity distribution of a light is shifted away from the center of the optical input waveguide, for example, due to a curvature in the optical input waveguide 2, the center of the optical intensity distribution can be shifted to the center of the narrow straight waveguide 26 as the light passes through the narrow straight waveguide 26. As a result, the light output from these trapezoidal waveguides 15 has an optical intensity distribution without distortion.

The trapezoidal waveguides 15 shown in Figures 13(c), 13(e), 13(k) and 13(n) are designed to function as a multi-mode waveguide, while the trapezoidal waveguides 15 shown in Figures 13(d), 13(f), 13(m) and 13(p) are designed to function as a waveguide having a single-mode width end.

Thus, as discussed above, the trapezoidal waveguide 15 is designed to function as either a waveguide having a single-mode width end or a multi-mode waveguide depending on the width of its narrow end.

However, in providing a waveguide having a single-mode end on at least one of the output side of the optical input waveguide and the input side of the optical output waveguide, the present invention is not limited to the trapezoidal waveguides 15 described above. Any waveguide having a width which is wider than those of the corresponding optical input waveguide and optical output waveguide, meeting the condition for a single-mode, and having at least one widening waveguide section which is widening toward the arrayed waveguide may be used as a waveguide having a single-mode end for this purpose.

Also, in providing a multi-mode waveguide on at least one of the output side of the optical input waveguide and the input side of the optical output waveguide, the present invention is not limited to the trapezoidal waveguides 15 described above either. Any waveguide having a width sufficient for a multi-mode and at least one widening waveguide section which is widening in the propagating direction of a light being transmitted may be used as a multi-mode waveguide for this purpose.

In the above embodiments, although the arrayed waveguide grating is utilized as a demultiplexer, the arrayed waveguide grating may also be utilized as a multiplexer. In such a case, lights are input from the second optical waveguides 6 and a light having a plurality of wavelength is output from one of the first optical waveguides 2.

Obviously, numerous modifications and variations of the present invention are possible in light of the above teachings. It is therefore to be understood that, within the scope of the appended claims, the invention may be practiced otherwise than as specifically described here.

**Claims**

1. An arrayed waveguide grating optical multiplexer/demultiplexer comprising:

   at least one first optical waveguide;
   a first slab waveguide;

an arrayed waveguide connected to said at least one first optical waveguide via said first slab waveguide;
a second slab waveguide; and
a plurality of second optical waveguides connected to said arrayed waveguide via said second slab waveguide, a number ($N_{ch}$) of the plurality of second optical waveguides being determined to substantially satisfy the following equation:

$$\Delta f_{fsr} = \Delta f_{ch} \cdot N_{ch}$$

where

$\Delta f_{fsr}$: Free Spectral Range of the arrayed waveguide grating optical multiplexer/demultiplexer
$\Delta f_{ch}$: a frequency interval between frequencies of lights to be input to the arrayed waveguide grating optical multiplexer/demultiplexer for being multiplexed or lights to be output from the arrayed waveguide grating optical multiplexer/demultiplexer after being demultiplexed.

2. An arrayed waveguide grating optical multiplexer/ demultiplexer according to Claim 1, further comprising:

at least one multi-mode waveguide having a first end portion and a second end portion, a second width of the second end portion being larger than a first width of the first end portion, the first end portion of each of said at least one multi-mode waveguide being connected to each of said at least one first optical waveguide, the second end portion of each of said at least one multi-mode waveguide being connected to said first slab waveguide, a width of said at least one multi-mode waveguide increasing from the first end portion toward the second end portion and being configured to realize multi-mode.

3. An arrayed waveguide grating optical multiplexer/ demultiplexer according to Claim 2, further comprising:

at least one straight waveguide each provided between each of said at least one first optical waveguide and each of said at least one multi-mode waveguide, said at least one straight waveguide having a width narrower than a first optical waveguide width of said at least one first optical waveguide.

4. An arrayed waveguide grating optical multiplexer/ demultiplexer according to Claim 2, further comprising:

at least one constant width waveguide provided between each of said at least one first optical waveguide and each of said at least one multi-mode waveguide, said at least one constant width waveguide having a substantially constant width which is substantially equal to the first width of the first end portion of said at least one multi-mode waveguide.

5. An arrayed waveguide grating optical multiplexer/ demultiplexer according to Claim 4, further comprising:

at least one straight waveguide provided between each of said at least one first optical waveguide and each of said at least one constant width waveguide, said at least one straight waveguide having a width narrower than a first optical waveguide width of said at least one first optical waveguide.

6. An arrayed waveguide grating optical multiplexer/ demultiplexer according to Claim 2, wherein said at least one multi-mode waveguide has a trapezoidal shape in which the first end portion is an upper base and the second end portion is a lower base.

7. An arrayed waveguide grating optical multiplexer/ demultiplexer according to Claim 2, wherein said at least one first optical waveguide comprises a plurality of first optical waveguides and said at least one multi-mode waveguides comprises a plurality of multi-mode waveguides, and wherein all of said plurality of first optical waveguides are connected to all of said plurality of multi-mode waveguides, respectively.

8. An arrayed waveguide grating optical multiplexer/ demultiplexer according to Claim 2, wherein said at least one first optical waveguide comprises a plurality of first optical waveguides at least one of which is connected to said first slab waveguide without interposing said at least one multi-mode waveguide.

9. An arrayed waveguide grating optical multiplexer/ demultiplexer according to Claim 1, further comprising:

a plurality of multi-mode waveguides each having a third end portion and a fourth end portion, a fourth width of the fourth end portion being larger than a third width of the third end portion, the third end portion of each of said plurality of multi-mode waveguides being connected to each of said plurality of second optical waveguides, the fourth end portion of each of said plurality of multi-mode waveguides being connected to said second slab waveguide, a width of said multi-mode waveguides increasing from the third end portion toward the fourth end portion and being configured to realize multi-mode.

**10.** An arrayed waveguide grating optical multiplexer/ demultiplexer according to Claim 9, further comprising:

a plurality of straight waveguides each provided between each of said plurality of second optical waveguides and each of said plurality of multi-mode waveguides, each of the said plurality of straight waveguides having a width narrower than the second optical waveguide width of each of said plurality of second optical waveguides.

**11.** An arrayed waveguide grating optical multiplexer/ demultiplexer according to Claim 9, further comprising:

a plurality of constant width waveguides each provided between each of said plurality of second optical waveguides and each of said plurality of multi-mode waveguides, each of said plurality of constant width waveguides having a substantially constant width which is substantially equal to the third width of the third end portion.

**12.** An arrayed waveguide grating optical multiplexer/ demultiplexer according to Claim 11, further comprising:

a plurality of straight waveguides each provided between each of said plurality of second optical waveguides and each of said plurality of constant width waveguides, each of said plurality of straight waveguides having a width narrower than a second optical waveguide width of each of said plurality of second optical waveguides.

**13.** An arrayed waveguide grating optical multiplexer/ demultiplexer according to Claim 9, wherein each of said plurality of multi-mode waveguides has a trapezoidal shape in which the third end portion is an upper base and the fourth end portion is a lower base.

**14.** An arrayed waveguide grating optical multiplexer/ demultiplexer according to Claim 1, further comprising:

at least one first multi-mode waveguide having a first end portion and a second end portion, a second width of the second end portion being larger than a first width of the first end portion, the first end portion of each of said at least one first multi-mode waveguide being connected to each of said at least one first optical waveguide, the second end portion of each of said at least one first multi-mode waveguide being connected to said first slab waveguide, a width of said at least one first multi-mode waveguide increasing from the first end portion toward the second end portion and being configured to realize multi-mode; and

a plurality of second multi-mode waveguides each having a third end portion and a fourth end portion, a fourth width of the fourth end portion being larger than a third width of the third end portion, the third end portion of each of said plurality of second multi-mode waveguides being connected to each of said plurality of second optical waveguides, the fourth end portion of each of said plurality of second multi-mode waveguides being connected to said second slab waveguide, a width of said second multi-mode waveguides increasing from the third end portion toward the fourth end portion and being configured to realize multi-mode.

**15.** An arrayed waveguide grating optical multiplexer/ demultiplexer according to Claim 14, further comprising:

at least one first straight waveguide each provided between each of said at least one first optical waveguide and each of said at least one first multi-mode waveguide, the at least one first straight waveguide having a width narrower than a first optical waveguide width of said at least one first optical waveguide.

**16.** An arrayed waveguide grating optical multiplexer/ demultiplexer according to Claim 15, further comprising:

a plurality of second straight waveguides each provided between each of said plurality of second optical waveguides and each of said plurality of second multi-mode waveguides, the second straight waveguides each having a width narrower than a second optical waveguide width of each of said plurality of second optical waveguides.

**17.** An arrayed waveguide grating optical multiplexer/ demultiplexer according to Claim 14, further comprising:

a plurality of second straight waveguides each provided between each of said plurality of second optical waveguides and each of said plurality of second multi-mode waveguides, the second straight waveguides each having a width narrower than a second optical waveguide width of each of said plurality of second optical waveguides.

**18.** An arrayed waveguide grating optical multiplexer/ demultiplexer according to Claim 14, further comprising:

at least one first constant width waveguide each provided between each of said at least one first optical waveguide and each of said at least one first multi-mode waveguide, the first constant width waveguide having a substantially constant width which is substantially equal to the first width of the first end portion of said at least one first multi-mode waveguide.

**19.** An arrayed waveguide grating optical multiplexer/ demultiplexer according to Claim 18, further comprising:

at least one first straight waveguide each provided between each of said at least one first optical waveguide and each of said first constant width waveguide, the first straight waveguide having a width narrower than a first optical waveguide width of said at least one first optical waveguide.

**20.** An arrayed waveguide grating optical multiplexer/ demultiplexer according to Claim 18, further comprising:

a plurality of second constant width waveguides each provided between each of said plurality of second optical waveguides and each of said plurality of multi-mode waveguides, each of the second constant width waveguides having a substantially constant width which is substantially equal to the third width of the third end portion.

**21.** An arrayed waveguide grating optical multiplexer/ demultiplexer according to Claim 20, further comprising:

at least one first straight waveguide each provided between each of said at least one first optical waveguide and each of said at least one first constant width waveguide, the at least one first straight waveguide having a width narrower than a first optical waveguide width of said at least one first optical waveguide.

**22.** An arrayed waveguide grating optical multiplexer/ demultiplexer according to Claim 21, further comprising:

a plurality of second straight waveguides each provided between each of said plurality of second optical waveguides and each of said plurality of second constant width waveguide, each of the second straight waveguides having a width narrower than a second optical waveguide width of each of said plurality of second optical waveguides.

**23.** An arrayed waveguide grating optical multiplexer/ demultiplexer according to Claim 14, further comprising:

a plurality of second constant width waveguides each provided between each of said plurality of second optical waveguides and each of said plurality of second multi-mode waveguides, the second constant width waveguides each having a substantially constant width which is substantially equal to the third width of the third end portion.

**24.** An arrayed waveguide grating optical multiplexer/ demultiplexer according to Claim 23, further comprising:

a plurality of second straight waveguides each provided between each of said plurality of second optical waveguides and each of said plurality of second constant width waveguides, the second straight waveguides each having a width narrower than a second optical waveguide width of each of said plurality of second optical waveguides.

**25.** An arrayed waveguide grating optical multiplexer/ demultiplexer according to Claim 24, further comprising:

at least one first constant width waveguide each provided between said at least one first optical waveguide and said at least one first multi-mode waveguide, the at least one first constant width waveguide having a substantially constant width which is substantially equal to the first width of the first end portion of said at least one first multi-mode waveguide.

26. An arrayed waveguide grating optical multiplexer/ demultiplexer according to Claim 14, wherein said at least one first multi-mode waveguide has a trapezoidal shape in which the first end portion is an upper base and the second end portion is a lower base, and wherein each of said plurality of second multi-mode waveguides has a trapezoidal shape in which the third end portion is an upper base and the fourth end portion is a lower base.

27. An arrayed waveguide grating optical multiplexer/ demultiplexer according to Claim 1, further comprising:

at least one single-mode waveguide having a first end portion and a second end portion, a second width of the second end portion being larger than a first width of the first end portion, the first end portion of each of said at least one single-mode waveguide being connected to each of said at least one first optical waveguide, the second end portion of each of said at least one single-mode waveguide being connected to said first slab waveguide, a width of said at least one single-mode waveguide increasing from the first end portion toward the second end portion and being configured to realize single-mode.

28. An arrayed waveguide grating optical multiplexer/ demultiplexer according to Claim 27, further comprising:

at least one straight waveguide each provided between each of said at least one first optical waveguide and each of said at least one single-mode waveguide, said at least one straight waveguide having a width narrower than a first optical waveguide width of said at least one first optical waveguide.

29. An arrayed waveguide grating optical multiplexer/ demultiplexer according to Claim 27, further comprising:

at least one constant width waveguide provided between each of said at least one first optical waveguide and each of said at least one single-mode waveguide, said at least one constant width waveguide having a substantially constant width which is substantially equal to the first width of the first end portion of said at least one single-mode waveguide.

30. An arrayed waveguide grating optical multiplexer/ demultiplexer according to Claim 29, further comprising:

at least one straight waveguide provided between each of said at least one first optical waveguide and each of said at least one constant width waveguide, said at least one straight waveguide having a width narrower than a first optical waveguide width of said at least one first optical waveguide.

31. An arrayed waveguide grating optical multiplexer/ demultiplexer according to Claim 27, wherein said at least one single-mode waveguide has a trapezoidal shape in which the first end portion is an upper base and the second end portion is a lower base.

32. An arrayed waveguide grating optical multiplexer/ demultiplexer according to Claim 27, wherein said at least one first optical waveguide comprises a plurality of first optical waveguides and said at least one single-mode waveguides comprises a plurality of single-mode waveguides, and wherein all of said plurality of first optical waveguides are connected to all of said plurality of single-mode waveguides, respectively.

33. An arrayed waveguide grating optical multiplexer/ demultiplexer according to Claim 27, wherein said at least one first optical waveguide comprises a plurality of first optical waveguides at least one of which is connected to said first slab waveguide without interposing said at least one single-mode waveguide.

34. An arrayed waveguide grating optical multiplexer/ demultiplexer according to Claim 1, further comprising:

a plurality of single-mode waveguides each having a third end portion and a fourth end portion, a fourth width of the fourth end portion being larger than a third width of the third end portion, the third end portion of each of said plurality of single-mode waveguides being connected to each of said plurality of second optical waveguides, the fourth end portion of each of said plurality of single-mode waveguides being connected to said second slab waveguide, a width of said single-mode waveguides increasing from the third end portion toward the fourth end portion and being configured to realize single-mode.

**35.** An arrayed waveguide grating optical multiplexer/ demultiplexer according to Claim 34, further comprising:

a plurality of straight waveguides each provided between each of said plurality of second optical waveguides and each of said plurality of single-mode waveguides, each of the said plurality of straight waveguides having a width narrower than the second optical waveguide width of each of said plurality of second optical waveguides.

**36.** An arrayed waveguide grating optical multiplexer/ demultiplexer according to Claim 34, further comprising:

a plurality of constant width waveguides each provided between each of said plurality of second optical waveguides and each of said plurality of single-mode waveguides, each of said plurality of constant width waveguides having a substantially constant width which is substantially equal to the third width of the third end portion.

**37.** An arrayed waveguide grating optical multiplexer/ demultiplexer according to Claim 36, further comprising:

a plurality of straight waveguides each provided between each of said plurality of second optical waveguides and each of said plurality of constant width waveguides, each of said plurality of straight waveguides having a width narrower than a second optical waveguide width of each of said plurality of second optical waveguides.

**38.** An arrayed waveguide grating optical multiplexer/ demultiplexer according to Claim 34, wherein each of said plurality of single-mode waveguides has a trapezoidal shape in which the third end portion is an upper base and the fourth end portion is a lower base.

**39.** An arrayed waveguide grating optical multiplexer/ demultiplexer according to Claim 1, further comprising:

at least one first single-mode waveguide having a first end portion and a second end portion, a second width of the second end portion being larger than a first width of the first end portion, the first end portion of each of said at least one first single-mode waveguide being connected to each of said at least one first optical waveguide, the second end portion of each of said at least one first single-mode waveguide being connected to said first slab waveguide, a width of said at least one first single-mode waveguide increasing from the first end portion toward the second end portion and being configured to realize single-mode; and
a plurality of second single-mode waveguides each having a third end portion and a fourth end portion, a fourth width of the fourth end portion being larger than a third width of the third end portion, the third end portion of each of said plurality of second single-mode waveguides being connected to each of said plurality of second optical waveguides, the fourth end portion of each of said plurality of second single-mode waveguides being connected to said second slab waveguide, a width of said second single-mode waveguides increasing from the third end portion toward the fourth end portion and being configured to realize single-mode.

**40.** An arrayed waveguide grating optical multiplexer/ demultiplexer according to Claim 39, further comprising:

at least one first straight waveguide each provided between each of said at least one first optical waveguide and each of said at least one first single-mode waveguide, the at least one first straight waveguide having a width narrower than a first optical waveguide width of said at least one first optical waveguide.

**41.** An arrayed waveguide grating optical multiplexer/ demultiplexer according to Claim 40, further comprising:

a plurality of second straight waveguides each provided between each of said plurality of second optical waveguides and each of said plurality of second single-mode waveguides, the second straight waveguides each having a width narrower than a second optical waveguide width of each of said plurality of second optical waveguides.

**42.** An arrayed waveguide grating optical multiplexer/ demultiplexer according to Claim 39, further comprising:

a plurality of second straight waveguides each provided between each of said plurality of second optical waveguides and each of said plurality of second single-mode waveguides, the second straight waveguides each having a width narrower than a second optical waveguide width of each of said plurality of second optical waveguides.

**43.** An arrayed waveguide grating optical multiplexer/ demultiplexer according to Claim 39, further comprising:

at least one first constant width waveguide each provided between each of said at least one first optical waveguide and each of said at least one first single-mode waveguide, the first constant width waveguide having a substantially constant width which is substantially equal to the first width of the first end portion of said at least one first single-mode waveguide.

**44.** An arrayed waveguide grating optical multiplexer/ demultiplexer according to Claim 43, further comprising:

at least one first straight waveguide each provided between each of said at least one first optical waveguide and each of said first constant width waveguide, the first straight waveguide having a width narrower than a first optical waveguide width of said at least one first optical waveguide.

**45.** An arrayed waveguide grating optical multiplexer/ demultiplexer according to Claim 43, further comprising:

a plurality of second constant width waveguides each provided between each of said plurality of second optical waveguides and each of said plurality of single-mode waveguides, each of the second constant width waveguides having a substantially constant width which is substantially equal to the third width of the third end portion.

**46.** An arrayed waveguide grating optical multiplexer/ demultiplexer according to Claim 45, further comprising:

at least one first straight waveguide each provided between each of said at least one first optical waveguide and each of said at least one first constant width waveguide, the at least one first straight waveguide having a width narrower than a first optical waveguide width of said at least one first optical waveguide.

**47.** An arrayed waveguide grating optical multiplexer/ demultiplexer according to Claim 46, further comprising:

a plurality of second straight waveguides each provided between each of said plurality of second optical waveguides and each of said plurality of second constant width waveguide, each of the second straight waveguides having a width narrower than a second optical waveguide width of each of said plurality of second optical waveguides.

**48.** An arrayed waveguide grating optical multiplexer/ demultiplexer according to Claim 39, further comprising:

a plurality of second constant width waveguides each provided between each of said plurality of second optical waveguides and each of said plurality of second single-mode waveguides, the second constant width waveguides each having a substantially constant width which is substantially equal to the third width of the third end portion.

**49.** An arrayed waveguide grating optical multiplexer/ demultiplexer according to Claim 48, further comprising:

a plurality of second straight waveguides each provided between each of said plurality of second optical waveguides and each of said plurality of second constant width waveguides, the second straight waveguides each having a width narrower than a second optical waveguide width of each of said plurality of second optical waveguides.

**50.** An arrayed waveguide grating optical multiplexer/ demultiplexer according to Claim 49, further comprising:

at least one first constant width waveguide each provided between said at least one first optical waveguide and said at least one first single-mode waveguide, the at least one first constant width waveguide having a substantially constant width which is substantially equal to the first width of the first end portion of said at least one first single-mode waveguide.

**51.** An arrayed waveguide grating optical multiplexer/ demultiplexer according to Claim 39, wherein said at least one first single-mode waveguide has a trapezoidal shape in which the first end portion is an upper base and the second end portion is a lower base, and wherein each of said plurality of second single-mode waveguides has a trapezoidal shape in which the third end portion is an upper base and the fourth end portion is a lower base.

**52.** An arrayed waveguide grating optical multiplexer/ demultiplexer according to Claim 2, wherein said at least one first optical waveguide comprises a plurality of first optical waveguides, said at least one multi-mode width waveguide comprises a plurality of multi-mode width waveguides, and wherein at least one of the plurality of first optical waveguides is connected to said first slab waveguide via at least one of the plurality of multi-mode waveguides.

**53.** An arrayed waveguide grating optical multiplexer/demultiplexer according to Claim 1, wherein the number ($N_{ch}$) of the plurality of second optical waveguides is an odd number.

**54.** An arrayed waveguide grating optical multiplexer/demultiplexer according to Claim 1, wherein the number ($N_{ch}$) of the plurality of second optical waveguides is at least three.

**55.** An arrayed waveguide grating optical multiplexer/demultiplexer comprising:

at least one first optical waveguide;
a first slab waveguide;
an arrayed waveguide connected to said at least one first optical waveguide via said first slab waveguide;
a second slab waveguide; and
a plurality of second optical waveguides connected to said arrayed waveguide via said second slab waveguide, a number ($N_{ch}$) of the plurality of second optical waveguides being determined, based on a frequency interval ($\Delta f_{ch}$) between frequencies of lights to be input to the arrayed waveguide grating optical multiplexer/demultiplexer for being multiplexed or lights to be output from the arrayed waveguide grating optical multiplexer/demultiplexer after being demultiplexed, such that the arrayed waveguide grating optical multiplexer/demultiplexer functions as an interleaver optical wavelength multiplexer/demultiplexer.

**56.** An arrayed waveguide grating optical multiplexer/demultiplexer according to Claim 55, wherein the number ($N_{ch}$) of the plurality of second optical waveguides is an odd number.

**57.** An arrayed waveguide grating optical multiplexer/demultiplexer according to Claim 55, wherein the number ($N_{ch}$) of the plurality of second optical waveguides is at least three.

**58.** A method for manufacturing an arrayed waveguide grating optical multiplexer/demultiplexer, comprising:

providing at least one first optical waveguide;
providing a first slab waveguide;
providing an arrayed waveguide connected to said at least one first optical waveguide via said first slab waveguide;
providing a second slab waveguide;
providing a plurality of second optical waveguides connected to said arrayed waveguide via said second slab waveguide; and
determining a number ($N_{ch}$) of the plurality of second optical waveguides to substantially satisfy the following equation:

$$\Delta f_{fsr} = \Delta f_{ch} \cdot N_{ch}$$

where

$\Delta f_{fsr}$: Free Spectral Range of the arrayed waveguide grating optical multiplexer/demultiplexer
$\Delta f_{ch}$: a frequency interval between frequencies of lights to be input to the arrayed waveguide grating optical multiplexer/demultiplexer for being multiplexed or lights to be output from the arrayed waveguide grating optical multiplexer/demultiplexer after being demultiplexed.

**59.** A method for manufacturing an arrayed waveguide grating optical multiplexer/demultiplexer, comprising:

providing at least one first optical waveguide;
providing a first slab waveguide;
providing an arrayed waveguide connected to said at least one first optical waveguide via said first slab waveguide;
providing a second slab waveguide;
providing a plurality of second optical waveguides connected to said arrayed waveguide via said second slab waveguide; and
determining a number ($N_{ch}$) of the plurality of second optical waveguides, based on a frequency interval ($\Delta f_{ch}$) between frequencies of lights to be input to the arrayed waveguide grating optical multiplexer/demultiplexer for being multiplexed or lights to be output from the arrayed waveguide grating optical multiplexer/demultiplexer after being demultiplexed, such that the arrayed waveguide grating optical multiplexer/demultiplexer functions as an interleaver optical wavelength multiplexer/demultiplexer.

**60.** An optical multiplexer/demultiplexer system comprising:

an arrayed waveguide grating optical multiplexer/demultiplexer comprising:

at least one first optical waveguide;
a first slab waveguide;
an arrayed waveguide connected to said at least one first optical waveguide via said first slab waveguide;
a second slab waveguide; and
a plurality of second optical waveguides connected to said arrayed waveguide via said second slab waveguide, a number ($N_{ch}$) of the plurality of second optical waveguides being determined to substantially satisfy the following equation:

$$\Delta f_{fsr} = \Delta f_{ch} \cdot N_{ch}$$

where

$\Delta f_{fsr}$: Free Spectral Range of the arrayed waveguide grating optical multiplexer/demultiplexer
$\Delta f_{ch}$: a frequency interval between frequencies of lights to be input to the arrayed waveguide grating optical multiplexer/demultiplexer for being multiplexed or lights to be output from the arrayed waveguide grating optical multiplexer/demultiplexer after being demultiplexed; and

at least two optical multiplexer/demultiplexer units each connected to each of the plurality of second optical waveguides.

## Fig. 1

# Fig. 2

# Fig. 3

Fig. 4 (a)

Fig. 4 (b)

Fig. 4 (c)

# Fig. 5

## Fig. 6

## Fig. 7

Fig. 8

EP 1 251 652 A2

# Fig. 9

# Fig. 10

## Fig. 11

## Fig. 12

Fig. 13 (a)

Fig. 13 (b)

Fig. 13 (c)

Fig. 13 (d)

Fig. 13 (e)

Fig. 13 (f)

Fig. 13 (g)

Fig. 13 (h)

Fig. 13 (i)

Fig. 13 (j)

Fig. 13 (k)

Fig. 13 (m)

Fig. 13 (n)

Fig. 13 (p)

## Fig. 14

λ1 λ3 λ5 λ7 λ9

λ1
λ3
λ5
λ7
λ9

9a

interleaver
optical
multiplexer/
demultiplexer

λ1, λ2, λ3, λ4,
λ5, λ6,···, λ10

1

λ2 λ4 λ6 λ8 λ10

λ2
λ4
λ6
λ8
λ10

9b

## Fig. 15

1

43

41          42

41    42

40(40b)

43

40(40a)

43

41    42

40(40c)

**Fig. 16**

Fig. 17

**Fig. 18**